# EUROPEAN PATENT SPECIFICATION

(11) **EP 0 535 087 B1**
(45) Date of publication and mention of the grant of the patent: **24.08.1994**
(21) Application number: 91911698.8
(22) Date of filing: 13.06.1991
(51) Int. Cl.: F16B 5/02, F16B 37/02

(54) **FASTENING MEANS**
BEFESTIGUNGSMITTEL
DISPOSITIF DE FIXATION

(30) Priority: 18.06.1990 SE 9002160
(43) Date of publication of application: 07.04.1993
(73) Proprietor: AB VOLVO, 405 08 Göteborg (SE)
(72) Inventor: LILJA, Harry, S-421 37 Västra Frölunda (SE)
(74) Representative: Mossmark, Anders
(86) International application number: SE9100427
(87) International publication number: WO9119909

(56) References cited:
- DE-C- 943 561
- GB-A- 700 061
- GB-A- 1 494 315
- GB-A- 2 162 272
- SE-B- 449 906
- US-A- 4 790 702

## Description

### Technical field:

The present invention relates to a fastening device, primarily for fixing a preferably expansive thin-walled element to a preferably likewise thin-walled component, said device comprising at least one screw with a shank and a head, said shank presenting a threaded portion extending along the shank from its end remote from the head, and at least one counterstay having a resiliently arranged first part with a hole for cooperation with said threaded portion on said shank, whereby said counterstay is provided with means for easily attaching the counterstay to said preferably thin-walled component at an opening therein such that the hole of the counterstay will be aligned with said opening.

The invention further relates to a method for fixing a preferably expansive thin-walled element to a preferably likewise thin-walled component having an opening using a fastening device according to the present invention.

### Background of the invention:

Fastening devices of the above-mentioned type are previously known from, for example, GB-A-700 061. This type of fastening device is commonly used in the car industry for, for example, fastening various sheet components. It is a general goal to optimize such fastening devices, especially with regard to both manufacturing and assembly aspects predominently on an economic scale.

This optimization goal has nowadays resulted in known used counterstays being provided with a hole (which cooperates with threads on the screw) which has a relatively limited strength. The hole for the threads is thus dimensioned to withstand a certain maximum torque from the screw. To ensure that this maximum force is not exceeded, devices such as electrically driven screwdrivers with the possibility of being adjusted to a certain maximum permitted torque are nowadays used for assembling such fastening devices. The reason why the maximum torque should be adjustable is that one and the same assembly worker often applies several types of fastening devices with different strength levels.

### Technical problem:

It has been shown however that certain fastening devices are not tightened with the desired force within a given range, i.e. the desired torque. This results in that certain devices are too loose whilst, worse still, in other cases the counterstay is pulled through. In this latter case, a plastic deformation of the force-bearing parts for the threads around the hole thus occurs which implies that the screw can no longer be tightened. The result is a product which, after assembly, does not meet the desired levels of quality. Why this should happen can be attributed to several reasons. On the one hand, certain tools do not have the desired degree of accuracy which is necessary to maintain the torque within given limits, whilst on the other hand, the assembly worker does not always make the necessary adjustment to the permitted maximum torque.

The object of the present invention is to provide a fastening device which overcomes the above described disadvantages.

### Solution:

Said object is achieved by means of a device according to the present invention which is characterized in that between said threaded portion and its head said shank presents a portion, preferably threadless, whose outer diameter is at least less than the outer diameter of the threaded portion and the smallest diametrical clearance of said hole such that a predetermined maximum clamping force between said element and component is attainable when said hole in said first part of the counterstay surrounds said preferably threadless portion of the shank and said first part abuts the threaded portion.

The method according to the present invention is characterized in that the counterstay is inserted in said opening in said component in an assembly movement whose direction primarily corresponds to the normal to the surface of the component and/or the screw's axial extension, and that during tightening of the fastening device, said first part is caused to move along said threaded portion of the screw towards the head of the screw until, at a maximum predetermined clamping force, the hole in the first part surrounds said preferably threadless portion of the shank and said first part abuts the threaded portion.

A bolt with a shank having a threadless portion is known per se from US-A-4 790 702. Said bolt is intended to cooperate with a conventional nut to clamp two components together when the nut encloses the threadless portion. The US document has as its object to reduce the likelyhood of the nut working loose.

### Brief description of the drawings:

The invention will be described in more detail with reference to embodiments shown in the attached drawings in which
- Fig. 1: is a side view of an assembled fastening device,
- Fig. 2: is a plan view of a counterstay for a fastening device according to the invention,
- Fig. 3: is a section view along line A-A of Fig. 2,
- Figs 4a, 4b: show a first modification of a counterstay according to Fig. 1,
- Figs 5a, 5b: show a second modification of a counterstay according to Fig. 1,
- Fig. 6: is a side view of a second embodiment of a device according to the invention, and
- Fig. 7: is a modification of a counterstay according to Fig. 6,
- Fig. 8: is a side view of a device according to the invention which is applied with help of adhesives,
- Fig. 9: is a plan view of a counterstay according to Fig. 8, and
- Fig. 10: is a modification of a counterstay according to Figs 8 and 9.

### Best mode of carrying out the invention:

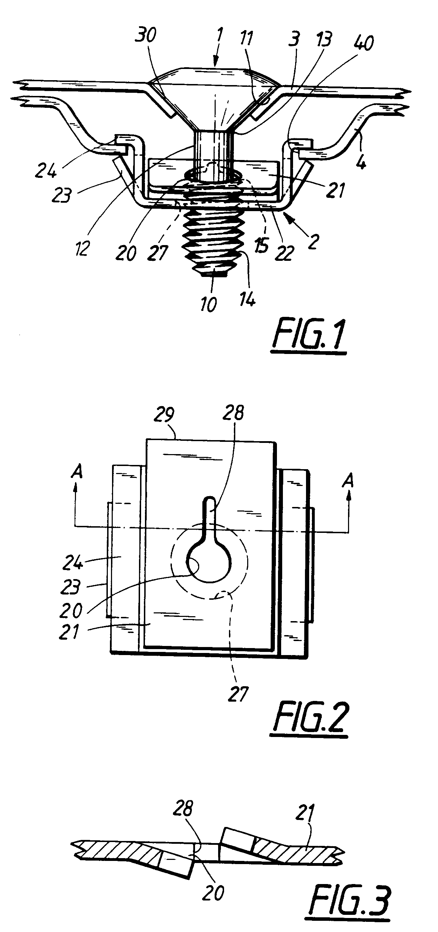

A preferred embodiment of the invention is shown in Fig. 1 and consists of a screw 1 and a counterstay 2. The counterstay 2 is inserted in a recess 40 in a thin-walled component 4. A thin-walled element 3 is fastened to the thin-walled component 4 with the aid of the screw 1, the tapered surface 11 of whose screw head abuts against a conical countersink 30 in the thin-walled element 3. The screw shank 10 is provided with threads 14 which cooperate with a hole 20 in the counterstay 2. The cooperating hole 20 in the counterstay 2 is arranged in a first part 21 of the counterstay 2, which part 21 is arranged essentially parallel to a second part 22 by means of said first part 21 being bent upwardly to this position in the same plane as said second part 22. The second part 22 is also provided with a hole 27 which has a larger diameter than the first mentioned hole 20 so that the second hole 27 can not cooperate with the threads 14 and the screw 1.

The counterstay 2 is provided with abutment flanges 24 and obliquely directed wings 23 cooperating therewith for fastening the counterstay 2 to the component 4. The wings 23 spring inwardly during insertion of the counterstay 2 so that a snapping-in occurs. The counterstay 2 can be applied to the component 4 in a direction which principally corresponds with the normal to the surface of the element 3 and the component 4. This direction of the normal also corresponds to the axial extension of the screw. Accordingly, the counterstay and screw in this preferred embodiment can be applied in one and the same direction which can have considerable advantages from an assembly point of view.

As can further be seen from Fig. 1, the screw shank 10 is provided with a threadless portion 12. This threadless portion 12 ensures that the hole 20 for the threads 14 can not be pulled through and that the retaining force, the clamping force, for the fastening device can be predetermined depending upon the spring force of the upper sheet 21 which is effected via the curved portion 29 with which it is connected to the lower part 22 of the counterstay. A further factor which affects the clamping force is of course the position of the axial end surface 15 of the threads 14.

The counterstay 2 is shown in plan view in Fig. 2. From here it can be seen that the hole 20 is provided with a slot 28 and that the hole 20 is to be found in the upper part 21 which is connected to the lower part 22 via a curved bent portion 29. The lower part 22 comprises a second hole 27 with a diameter which is considerably larger than that of the first mentioned hole 20. It can further be seen that the longitudinal extension of the obliquely directed side surfaces 23 do not extend for as long as the abutment flanges 24. In Fig. 3 there is shown a section through the upper part 21 of the counterstay 2. The section shows that the pitch of thread for the hole is provided by bending the two side surfaces around the slot 28.

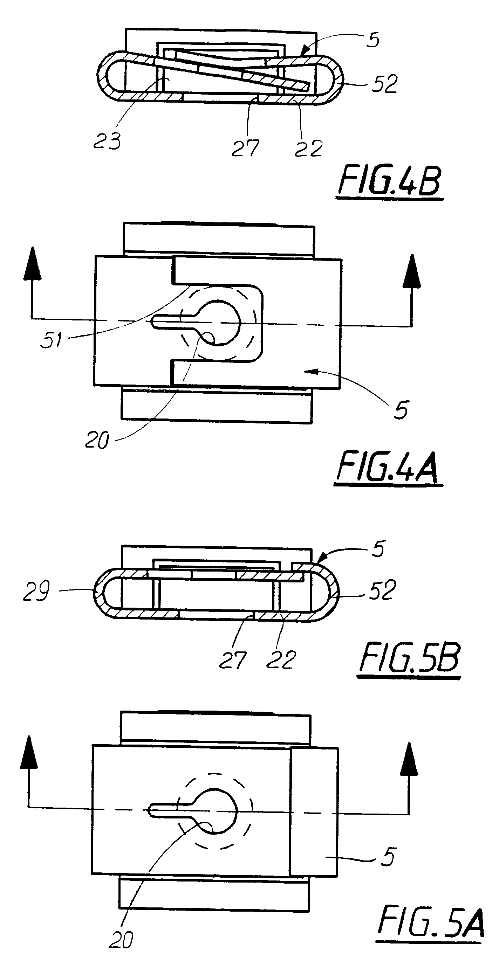

Fig. 4a shows a plan view of a first modified counterstay 2 according to the invention. Fig. 4b shows the same counterstay in a longitudinal section. The modified counterstay differs from the counterstay according to Fig. 1 in that it is provided with a torque reinforcing part 5 which accordingly increases the spring resistance of the counterstay. The torque reinforcing part 5 consists of a portion bent up from the lower part 22. This part, in the same way as with the part 21 provided with the thread hole 20, is also shaped with a curved region 52. In order to provide space for the screw 1, the torque reinforcing part 5 is arranged with a larger recess 51 which is consequently centrally located in relation to the threaded hole 20.

In a corresponding manner to Figs 4a and 4b, Figs 5a and 5b show a second modification of a counterstay 2 according to the invention. The torque reinforcement part 5, in the latter mentioned case, functions more as a passive abutment for the threaded part 21 whilst the embodiment according to the modification presents a torque reinforcing part of a more active type.

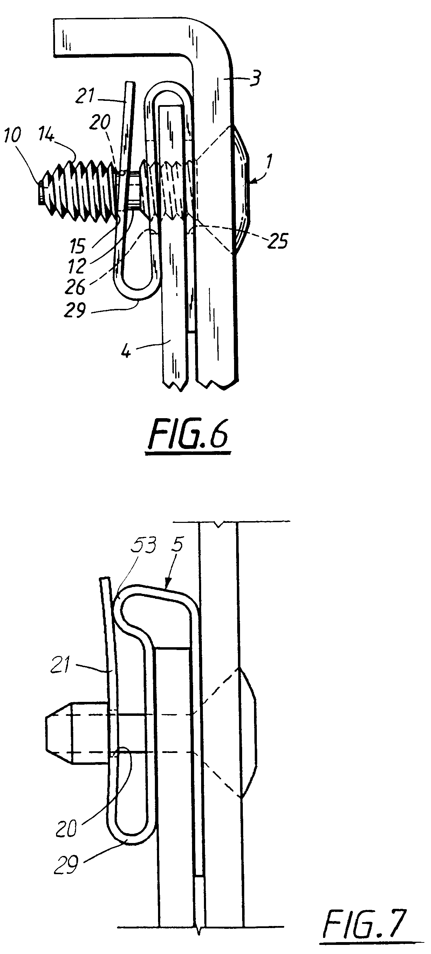

1A second embodiment of the invention is shown in Fig. 6 where the screw 1 is essentially shaped the same as described earlier, with the difference that not all the entire upper region of the threads 14 is removed, but only a reduced threadless portion 12 is provided. The counterstay 2, however, is of a different type and in a side profile as shown in Fig. 6 presents an S-like shape. The two branches which contain larger holes 25, 26 are hereby intended to project around the component 4 to which they are intended to be affixed. The outer spring part 21 of the counterstay is provided with a smaller hole 20 for cooperation with the threads 14 of the screw 1. A resilient tensioning force is also maintained in this case thanks to a curved region 29. The counterstay 2 according to this embodiment has also been produced with the help of stamping and bending.

A modified counterstay 2 is shown in Fig. 7 for a device according to the invention in accordance with Fig. 6. In order to increase the bending resistance of the upper part 21 which is provided with the thread-cooperating hole 20, the middle portion 26 is provided at its one end with a bulge 53 which abuts against the outer part 21 in the region of its free end.

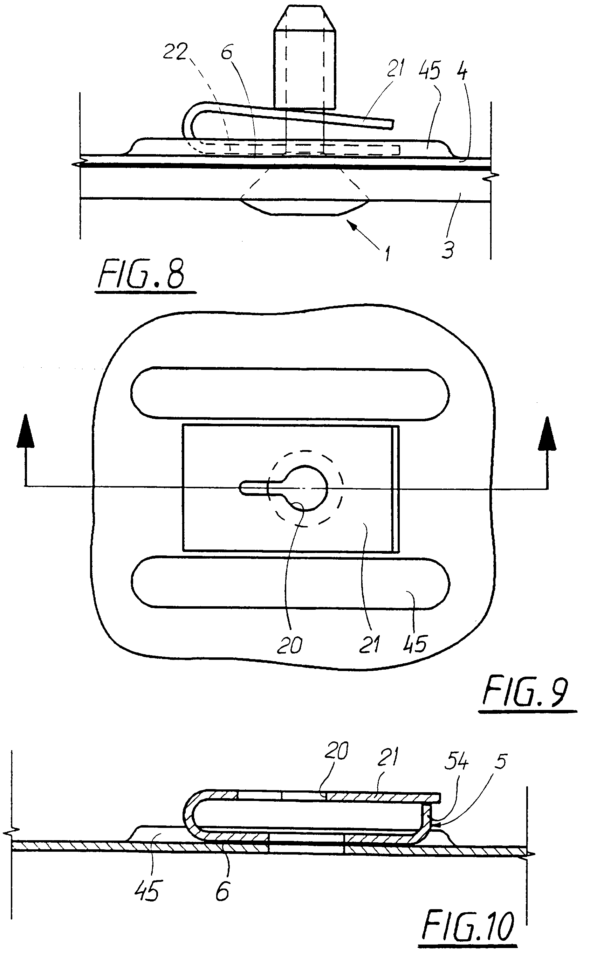

Counterstays 2 are shown in Figs 8, 9 and 10 which are affixed as necessary with adhesives. Such a counterstay 2 is shown in Fig. 8 arranged on a first sheet 4 with help of an adhesive agent 6. On the same side as the counterstay 2, the sheet presents rotation-preventing embossings 45 arranged to prevent rotation of the counterstay 2. As with other counterstays, the outer sprung part 21 is provided with a hole 20 which cooperates with the threads on the screw 1. With help of the thus applied counterstay 2, it is possible to simply apply a thin-walled expansive element 3 to the first mentioned sheet 4 with help of a screw 1. Fig. 9 shows the counterstay according to Fig. 8 in plan view. The figure shows that the sheet 4 is provided with embossings 45 on both sides of the counterstay 2. The figure further implies that the sheet 4 and the inner part 22 of the counterstay 2 are each provided with a hole large in relation to the threaded hole 20. This hole is centred in relation to the threaded hole 20 of the counterstay 2.

Finally Fig. 10 shows a glued counterstay 2 in cross section and which counterstay is provided with a torque reinforcing part 5. The torque reinforcing part 5 consists of a portion 54 of the lower part 22 of the counterstay 2 bent upwardly at 90°.

### Advantages:

A big advantage with the invention is that the maximum clamping force of a tightened fastening device is, in practice, independent of the torque with which it is tightened. This means that one and the same type of tool can be used for all assembly of such fastening devices and thereby always achieve optimal clamping force without need to adjust the torque. One precondition is however that all tools in this instance deliver a maximum torque which is at least as great as the torque which is necessary to tighten the largest sized fastening device. A solution in accordance with the invention:
- thus always provides optimally tightened fastening devices which, amongst other things, implies constant levels of tighting force for the same embodiment,
- eliminates adjustment operations,
- implies optimization of the buying in of tightening tools, i.e. just one type is required.

It will be clear to the skilled man that the invention is not restricted to that described above but can be varied within the scope of the appended claims. Accordingly, the invention can also be used for components other than those with thin walls, for example for joining thick-walled elements to thick-walls components. Furthermore, the screw shaft does not need to have a completely threadless portion, it is sufficient if the outer diameter in this portion is less than the smallest diametrical clearance of the hole 20. A resilient function of the counterstay itself is desirable but can for example be compensated for by means of resilient properties of for example the component. The shown counterstay, which is made from one piece, with the curved bent spring portion has advantages from a manufacturing point of view, but other solutions, for example parts provided with a flexible adhesive means are also possible. Instead of snapping-in, it is for example possible that the counterstay is rotatably fastened. The device shown in Fig. 6 can also be provided with the sprung part 21 against the screw 1 if there is sufficient space. The torque increasing device 5 can, in many of the shown examples, be arranged on the corresponding part of the counterstay 2, in Fig. 10 for example the leg 54 can just as well be provided on the outer part 21.

## Claims

1. Fastening device intended for affixing a preferably expansive thin-walled element (3) to a preferably likewise thin-walled component (4), said device comprising at least one screw (1) with a shank (10) and a head (11), said shank presenting a threaded portion (14) extending along the shank from its end remote from the head (11), and at least one counterstay (2) having a resiliently arranged first part (21) with a hole (20) for cooperation with said threaded portion (14) on said shank (10), whereby said counterstay (2) is provided with means (23,24) for easily attaching the counterstay (2) to said preferably thin-walled component (4) at an opening (40) therein such that the hole (20) of the counterstay (2) will be aligned with said opening, **characterized** in that between said threaded portion (14) and its head (11) said shank (10) presents a portion (12), preferably threadless, whose outer diameter is at least less than the outer diameter of the threaded portion (14) and the smallest diametrical clearance of said hole (20) such that a predetermined maximum clamping force between said element (3) and component (4) is attainable when said hole (20) in said first part (21) of the counterstay surrounds said preferably threadless portion (12) of the shank (10) and said first part (21) abuts the threaded portion (14).

2. Fastening device according to claim 1,
**characterized** in that the first part (21) of the counterstay (2) which includes said hole (20) is connected to a second part (22) of the counterstay (2) by means of a curved region.

3. Fastening device according to claim 2,
**characterized** in that the counterstay is provided with a torque increasing member (5).

4. Fastening device according to claim 2,
**characterized** in that the counterstay (2) is intended to be applied in such a way that said first part (21) is arranged closer to the head (11) of the screw (1) than said second part (22), and preferably that said second part is provided with a second hole (27) whose diameter considerably exceeds that of said hole (20).

5. Fastening device according to claim 1,
**characterized** in that said means for easily attaching the counterstay (2) to said thin-walled component (4) is in the form of snap-in means (23) and cooperating abutment means (24).

6. Fastening device according to any of the previous claims, **characterized** in that all the parts/means in the counterstay are produced from one and the same sheet blank, preferably with help of various stamping and bending operations.

7. Fastening device according to claim 2,
**characterized** in that the counterstay (2) is made from a unit with an S-shaped side profile whereby it includes just the first mentioned hole (20) or is also provided with two further holes (25, 26) which are substantially coaxial with, and larger than, the first mentioned hole (20).

8. Fastening device according to claim 1,
**characterized** in that said hole (20) is provided with a slot (28).

9. Method for fixing a preferably expansive thin-walled element (3) to a preferably likewise thin-walled component (4) having an opening (40) using a fastening device according to any of claims 1-8, **characterized** in that the counterstay (2) is inserted in said opening (40) in said component (4) in an assembly movement whose direction primarily corresponds to the normal to the surface of the component (4) and/or the screw's (1) axial extension, and that during tightening of the fastening device, said first part (21) is caused to move along said threaded portion (14) of the screw (1) towards the head of the screw until, at a maximum predetermined clamping force, the hole (20) in the first part (21) surrounds said preferably threadless portion (12) of the shank (10) and said first part (21) abuts the threaded portion (14).

## Patentansprüche

1. Befestigungsvorrichtung zum Festlegen eines vorzugsweise ausdehnungsfähigen, dünnwandigen Teils (3) an einem vorzugsweise ebenfalls dünnwandigen Bauteil (4) mit Hilfe wenigstens einer Schraube (1) mit einem Schaft (10) und einem Kopf (11), wobei der Schaft einen Gewindeteil (14) hat, der sich längs des Schaftes von demjenigen Ende aus erstreckt, das vom Kopf (11) entfernt ist, sowie mit Hilfe wenigstens einer Gegenführung (2), die ihrerseits ein nachgiebig angeordnetes, erstes Teil (21) mit einem Loch (20) zur Zusammenarbeit mit dem Gewindeteil (14) auf dem Schraubenschaft (10) hat, wobei die Gegenführung (2) mit Mitteln (23, 24) versehen ist, mit deren Hilfe die Gegenführung (2) leicht an dem vorzugsweise dünnwandigen Bauteil (4) an einer Öffnung (40) in diesem Bauteil so angebracht werden kann, daß das Loch (20) der Gegenführung (2) mit dieser Öffnung ausgerichtet ist, **dadurch gekennzeichnet**, daß der Schraubenschaft (10) zwischen seinem Gewindeabschnitt (14) und seinem Kopf (11) einen vorzugsweise gewindelosen Abschnitt (12) hat, dessen Außendurchmesser wenigstens gegenüber dem Außendurchmesser des Gewindeabschnitts (14) und dem kleinsten Durchmesser des Lochs (20) kleiner ist, so daß zwischen dem Teil (3) und dem Bauteil (4) ein vorbestimmtes Größtmaß an Klemmkraft dann erzielbar ist, wenn das Loch (20) im ersten Teil (21) der Gegenführung den vorzugsweise gewindelosen Abschnitt (12) des Schraubenschafts (10) umgibt und wenn das erste Teil (21) am Gewindeabschnitt (14) anliegt.

2. Befestigungsvorrichtung nach Anspruch 1, **dadurch gekennzeichnet**, daß der erste Teil (21) der Gegenführung (2), der das Loch (20) umfaßt, mit Hilfe eines gebogenen Abschnitts mit einem zweiten Teil (22) der Gegenführung (2) verbunden ist.

3. Befestigungsvorrichtung nach Anspruch 2, **dadurch gekennzeichnet**, daß die Gegenführung mit einem drehmomenterhöhenden Teil (5) versehen ist.

4. Befestigungsvorrichtung nach Anspruch 2, **dadurch gekennzeichnet**, daß die Gegenführung dazu bestimmt ist, so angewendet zu werden, daß der erste Teil (21) näher am Kopf (11) der Schraube (1) liegt als der zweite Teil (22), wobei der zweite Teil vorzugsweise mit einem zweiten Loch versehen ist, dessen Durchmesser den des Lochs (20) erheblich übersteigt.

5. Befestigungsvorrichtung nach Anspruch 1, **dadurch gekennzeichnet**, daß das Mittel zum leichten Anbringen der Gegenführung (2) am dünnwandigen Bauteil (4) die Form einer Einschnappvorrichtung (23) und eines damit zusammenarbeitenden Anschlags (24) hat.

6. Befestigungsvorrichtung nach einem der vorangegangenen Ansprüche, **dadurch gekennzeichnet**, daß alle Teile/Mittel der Gegenführung aus ein und demselben Blechrohling hergestellt werden, vorzugsweise mit Hilfe von verschiedenen Stanz- und Biegevorgängen.

7. Befestigungsvorrichtung nach Anspruch 2, **dadurch gekennzeichnet**, daß die Gegenführung (2) aus einer Einheit mit einem S-förmigen Seitenprofil hergestellt wird, wobei sie entweder nur das erste erwähnte Loch (20) aufweist oder wobei sie ferner mit zwei weiteren Löchern (25, 26) versehen ist, die im wesentlichen mit dem ersterwähnten Loch (20) koaxial und größer als diese sind.

8. Befestigungsvorrichtung nach Anspruch 1, **dadurch gekennzeichnet**, daß das Loch (20) mit einem Schlitz (28) versehen ist.

9. Verfahren zum Festlegen eines vorzugsweise ausdehnungsfähigen, dünnwandigen Bauteils (4), das eine Öffnung (40) hat, unter Verwendung einer Befestigungsvorrichtung nach einem der Ansprüche 1 bis 8, **dadurch gekennzeichnet**, daß in einer Montagebewegung, deren Richtung in erster Linie der Richtung entspricht, die zur Oberfläche des Bauteils senkrecht steht und/oder die zur Erstreckung der Schraube axial verläuft, die Gegenführung (2) in die Öffnung (40) eingeschoben wird und daß während des Anziehens der Befestigungsvorrichtung der erste Teil (21) dazu gebracht wird, sich längs des Gewindeabschnitts (14) der Schraube (1) in Richtung auf den Schraubenkopf zu bewegen, und zwar so lange, bis das Loch (20) in dem ersten Teil (21) bei einer größtmöglichen, vorbestimmten Klemmkraft den vorzugsweise gewindelosen Abschnitt (12) des Schraubenschafts (10) umgibt und bis der erste Teil (21) am Gewindeteil (14) anliegt.

## Revendications

1. Dispositif de fixation destiné à fixer un élément (3) à paroi mince, qui peut de préférence se dilater, à un organe (4) ayant de préférence une paroi mince de manière analogue, le dispositif comprenant au moins une vis (1) ayant une tige (10) et une tête (11), la tige ayant une partie filetée (14) disposée le long de la tige depuis son extrémité distante de la tête (11), et au moins un support auxiliaire (2) ayant une première partie (21) disposée élastiquement et comprenant un trou (20) destiné à coopérer avec la partie filetée (14) de la tige (10), le support auxiliaire (2) comprenant un dispositif (23, 24) destiné à assurer une fixation facile du support auxiliaire (2) à l'organe (4) ayant de préférence une paroi mince au niveau d'une ouverture (40) de celui-ci afin que le trou (20) du support auxiliaire (2) soit aligné sur l'ouverture, caractérisé en ce que la tige (10) présente, entre la partie filetée (14) et sa tête (11), une partie (12) de préférence sans filet dont le diamètre externe est au moins inférieur au diamètre externe de la partie filetée (14) et au plus petit espace diamétral du trou (20) afin qu'une force maximale prédéterminée de serrage entre l'élément (3) et l'organe (4) puisse être obtenue lorsque le trou (20) de la première partie (21) du support auxiliaire entoure la partie (12) de préférence sans filetage de la tige (10) et la première partie (21) est en butée contre la partie filetée (14).

2. Dispositif de fixation selon la revendication 1, caractérisé en ce que la première partie (21) du support auxiliaire (2) qui comprend le trou (20) est raccordée à la seconde partie (22) du support auxiliaire (2) par une région courbe.

3. Dispositif de fixation selon la revendication 2, caractérisé en ce que le support auxiliaire comporte un organe (5) destiné à augmenter un couple.

4. Dispositif de fixation selon la revendication 2, caractérisé en ce que le support auxiliaire (2) est destiné, à être appliqué de manière que la première partie (21) soit plus proche de la tête (11) de la vis (1) que la seconde partie (22), et de préférence en ce que la seconde partie comporte un second trou (27) dont le diamètre est considérablement supérieur à celui dudit trou (20).

5. Dispositif de fixation selon la revendication 1, caractérisé en ce que le dispositif de fixation facile du support auxiliaire (2) à l'organe (4) à paroi mince est sous forme d'un dispositif à enclenchement élastique (23) et d'un dispositif coopérant de butée (24).

6. Dispositif de fixation selon l'une quelconque des revendications précédentes, caractérisé en ce que toutes les parties et tous les dispositifs incorporés au support auxiliaire sont formés dans un seul et même flan, de préférence par des opérations de poinçonnage et de pliage.

7. Dispositif de fixation selon la revendication 2, caractérisé en ce que le support auxiliaire (2) est formé d'un élément ayant un profil latéral en S si bien qu'il comprend seulement le premier trou cité (20) ou comporte aussi deux trous supplémentaires (25, 26) qui sont pratiquement coaxiaux au premier trou cité (20) et plus grands que celui-ci.

8. Dispositif de fixation selon la revendication 1, caractérisé en ce que ledit trou (20) comporte une fente (28).

9. Procédé de fixation d'un élément (3) à paroi mince, capable de préférence de se dilater, à un organe (4) qui a aussi de préférence une paroi mince et qui a une ouverture (40), par utilisation d'un dispositif de fixation selon l'une quelconque des revendications 1 à 8, caractérisé en ce que le support auxiliaire (2) est introduit dans l'ouverture (40) de l'organe (4) dans un mouvement de montage dont la direction correspond essentiellement à la perpendiculaire à la surface de l'organe (4) et/ou à la longueur axiale de la vis (1), et en ce que, pendant le serrage du dispositif de fixation, la première partie (21) est déplacée le long de la partie filetée (14) de la vis (1) vers la tête de la vis jusqu'à ce que, pour une force maximale prédéterminée de serrage, le trou (20) de la première partie (21) entoure la partie (12) sans filetage de préférence de la tige (10) et la première partie (21) soit en butée contre la partie filetée (14).
